# EUROPEAN PATENT APPLICATION

(11) **EP 1 402 996 A1**
(43) Date of publication of application: **31.03.2004**
(21) Application number: 03021938.0
(22) Date of filing: 29.09.2003
(51) Int. Cl.: B23Q 3/06, B23Q 3/10, B23Q 3/154, B25B 5/16, B25B 11/00, B25B 1/24

(54) **Magnetic fastening elements for vices or piece holding tables**

(30) Priority: 30.09.2002 IT VR20020095
(71) Applicant: M.A.G. Meccanica Srl, 36030 San Vito di Leguzzano (VI) (IT)
(72) Inventor: Gasparin, Andrea, 36015 Schio (VI) (IT)
(74) Representative: Petraz, Gilberto

(57) **Abstract**

A clamping element (10) for a vice and/or worktable comprises a laminar metal body (11) and presents, on at least one face (12), at least one permanent magnet (14) designed to be fixed to the body of the vice or worktable in order to make the fixing and clamping of a piece to be machined easier.

## Description

### TECHNICAL FIELD

This invention concerns magnetic fastening elements forming shims of varying thickness which can be applied to vices and/or worktables for carrying out machining processes by means of machine tools.

More specifically, this invention refers to magnetic shims which can be temporarily fixed to vices and designed to adapt to the external configuration of rough or semifinished parts to be machined usually to remove shavings.

This invention can be mainly applied in the mechanical manufacturing industry.

### BACKGROUND ART

It is known that a machine tool is equipped with at least one machining unit, consisting for example of a turret fitted with cutting blades or grinding wheels, and a bed on which the pieces can be fixed in order to carry out the required machining processes.

The bed usually has a worktable and/or a vice configured in such a way that a vast range of pieces can be accommodated, within the limits of the dimensions and weights that the bed can sustain.

The adaptation of the shape of the pieces being machined to the flat walls of the vice is achieved by inserting appropriately shaped shims or blocks designed, by means of the compressing action of the jaws of the vice, to temporarily fix the piece in place during the machining process to remove the shavings.

Setting up of the vice with the shims is an operation that is performed manually by a skilled worker.

The shims or blocks usually have a laminar configuration so that they can be grouped one by one to achieve predetermined sizes and obtain correct positioning and/or clamping of the piece in the vice.

One disadvantage is represented by the fact that setting up the clamping means is sometimes quite a laborious operation as the shims are fixed to each other and/or to the walls of the jaws of the vice by means of press-fit devices or by means of pins which are housed in respective holes.

Another disadvantage is represented by the fact that the pieces, temporarily clamped by means of the shims, must not present burr which would hinder the correct positioning of the blocks, making the closing action of the vice ineffective.

Removal of the burr is therefore another process that must be carried out before positioning the piece in the vice.

### DESCRIPTION OF THE INVENTION

This invention proposes to provide magnetic clamping shims that are able to eliminate or significantly reduce the disadvantages described above.

This invention also proposes to provide magnetic shims that can be easily produced in order to be economically advantageous.

This is achieved by means of a shim with the features described in the main claim.

The dependent claims described advantageous embodiments of the invention.

The magnetic clamping shims according to this invention comprise a variously shaped laminar metal body with at least one side equipped with one or more permanent magnets.

In accordance with the invention, the laminar body is equipped with appropriate housings designed to accommodate the respective permanent magnets by press-fitting.

The metal shims can have a rectangular transverse cross-section or a trapezoidal transverse cross-section (having a pronounced longitudinal narrowed end) and are designed to clamp rough or semifinished pieces with flat and shaped surfaces to be fixed in the vice.

The permanent magnets ensure adequate adherence of the shim to the metal walls of the jaws of the vice and to any other adjacently positioned shims in order to clamp the piece being machined.

This adherence is effective as regards both the rapid movements of the worktable and the action exercised by the compressed air used by the machine tool.

According to particular devices for fixing the shims to the jaws of the vice, it is possible to clamp rough pieces presenting burr as a result of previous machining operations.

The shims are perfectly interchangeable and can be applied to the vice and/or worktable of any machine tool, thus allowing great flexibility in use as well as easy setting up of the equipment, considerably reducing machine down time.

### DESCRIPTION OF THE DRAWINGS

Other features and advantages of the invention will become evident on reading the following description of one embodiment of the invention, given as a non-binding example, with the help of the enclosed drawings, in which:
- figure 1 shows a front elevation of a shim according to this invention;
- figure 2 is a cross-section view along the line II-II indicated in figure 1;
- figure 3 shows a prospective view slightly from above and on a reduced scale of some shims fixed to the jaws of a clamp;
- figure 4 shows a front elevation of a shim with a longitudinal narrowed end;
- figure 5 is a cross-section view along the line V-V indicated in figure 4; and
- figures 6 to 9 are similar to figure 3 illustrating various arrangements of shims in the vice.

### DESCRIPTION OF ONE EMBODIMENT

In the figures, the reference number 10 indicates in general a clamping element, in the case in question a magnetic shim 10 for fixing pieces in the vice of a machine tool.

The shim 10 comprises a laminar body 11 the faces 12 of which present housings 13 in their central portion, designed to accommodate respective permanent magnets 14.

The permanent magnets 14 can be fixed in the respective housings by any appropriate means of coupling, for example by press-fitting.

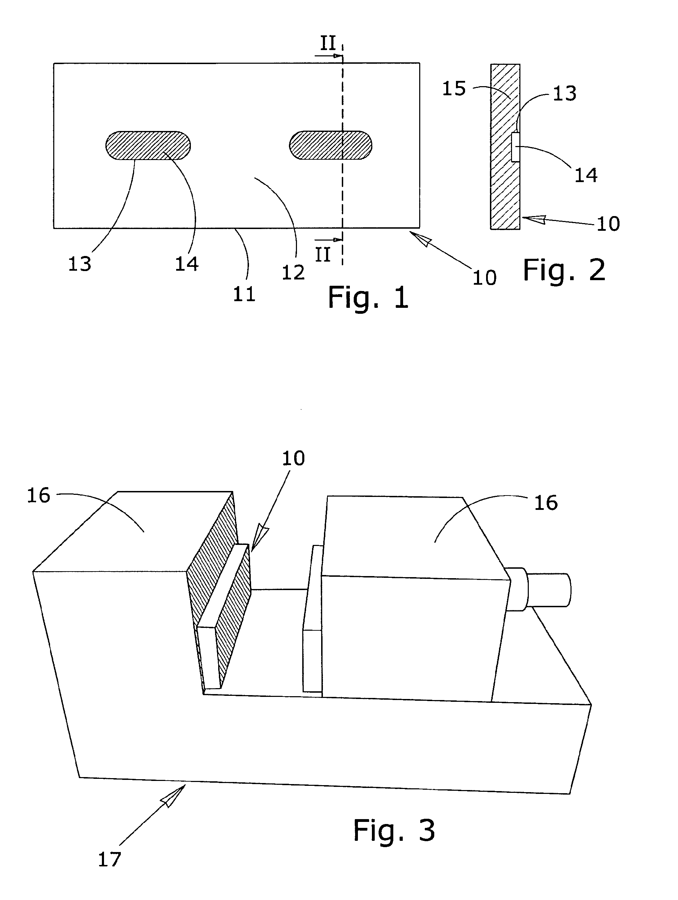

As can be seen in figure 2, the shim 10 presents a rectangular cross-section 15.

As can be seen in figure 3, this shim or block 10 adapts well to the fixing of pieces with flat surfaces which can easily be compressed by the action of the jaws 16 of a vice 17.

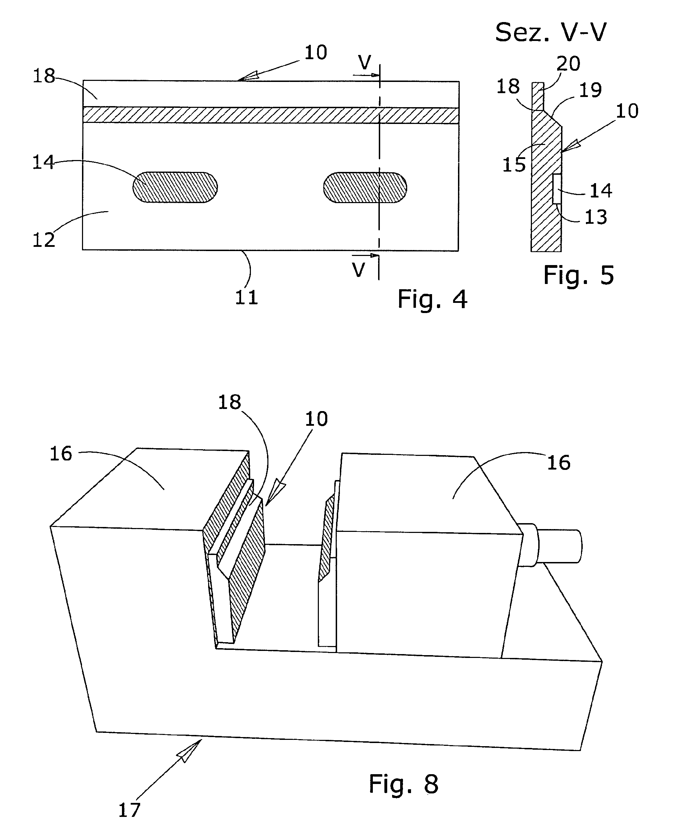

With reference to figures 4 and 5, the shim 10 can have a longitudinal narrowed end 18 presenting a sloping section 19, at one longitudinal edge, connecting with a protruding tab 20.

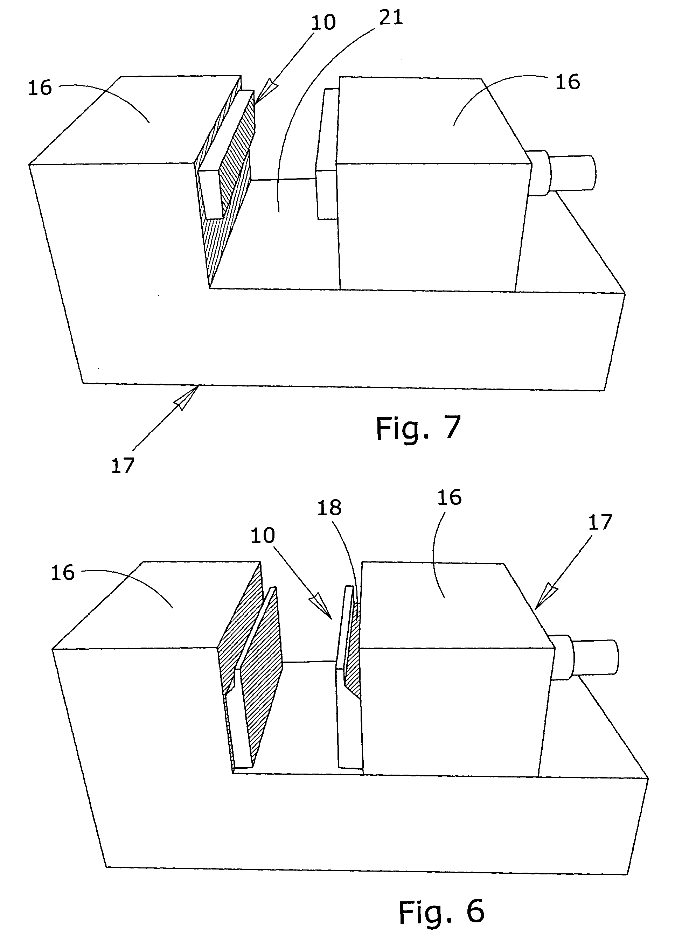

Fixing the shims 10 with the respective narrowed ends 18 facing the inner walls of the jaws 16 (figure 6), it is possible to clamp pieces presenting burr accommodated in the narrowed ends 18.

Clamping a piece with burr makes it possible to reduce the machining stages, grouping several operations together in a single conclusive stage once the piece has been extracted from the vice 17.

As can be seen in figure 7, thanks to the fixing action of the magnets 14, the shims 10 can be applied to the inner walls of the jaws 16 at a certain distance from the base 21 of the vice 17. In this way it is possible to fix pieces presenting burr with these surfaces facing the base 21 of the vice 17.

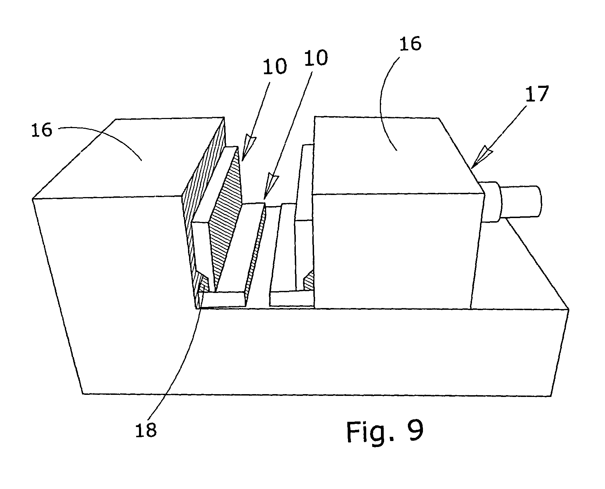

As can be seen from figure 8, the shims 10 with narrowed ends 18 can be fixed to the walls of the jaws 16 offering a clamping configuration suitable for machining holes and through machining operations in general, close to the jaws themselves.

As can be seen in figure 9, the shims 10 can easily be fixed and stacked on the base 21 of the vice 17 for correct positioning of small pieces.

The laminar form of the shim 10 allows a modular pack arrangement suited to cover a wide range of dimensions of the pieces to be blocked in the vice 17.

The modular pack arrangement of the shims 10 with narrowed ends 18 also ensures the simultaneous clamping of several pieces in the vice 17, considerably reducing setting up times.

The presence of the permanent magnets 14 allows the shims 10 to be fixed in any position inside the vice 17. The shims 10 can even protrude from the jaws 16 for particular machining requirements.

The invention is described above with reference to some preferred embodiments. However, it is susceptible to numerous variations that do not go beyond the scope of the following claims, within the framework of technical equivalents.

## Claims

1. A clamping element (10) for a vice and/or worktable, comprising a laminar metal body (11), **characterised in that**, on at least one face (12), it presents at least one permanent magnet (14) designed to be fixed to the body of the vice or worktable in order to make the fixing and clamping of a piece to be machined easier.

2. A clamping element (10) according to claim 1, **characterised in that** (11) it is equipped with housings (13) designed to firmly accommodate the respective permanent magnets (14) by appropriate fixing means.

3. A clamping element (10) according to claim 2, **characterised in that** these fixing means consist of a press-fit coupling.

4. A clamping element (10) according to any of the foregoing claims, **characterised in that** it has a rectangular transverse cross-section (15).

5. A clamping element (10) according to any of the foregoing claims from 1 to 3, **characterised in that** it has a trapezoidal transverse cross-section (15).

6. A clamping element (10) according to any of the foregoing claims, **characterised in that** it presents a longitudinal narrowed end (18) at at least one longitudinal edge of the laminar body (11).

7. A clamping element (10) according to any of the foregoing claims, **characterised in that** the housings (13) are in the central portion of the side (12).
